# EUROPEAN PATENT APPLICATION

(11) **EP 4 786 962 A1**
(43) Date of publication of application: **05.08.2026**
(21) Application number: 26153706.2
(22) Date of filing: 23.01.2026
(51) Int. Cl.: G01N 21/952

(54) **A SYSTEM AND METHOD FOR INSPECTION OF AN INSULATION SYSTEM OF A CABLE**

(30) Priority: 04.02.2025 NO 20250127
(71) Applicant: Nexans, 92400 Courbevoie (FR)
(72) Inventor: Frisk, Nils-Bertil, SE-45297 Strömstad (SE); Doedens, Espen, 1788 Halden (NO)
(74) Representative: Acapo Onsagers AS

(57) **Abstract**

A system for inspection of an insulation system of a cable, wherein the cable comprises an electric conductor and an insulation system surrounding the electric conductor, the system comprises a cable stripping device configured to radially slice the cable insulation system to produce a helically formed strip of insulation, and an optical inspection device configured to receive the helically formed strip of insulation and inspect it to detect any anomalies present in the helically formed strip of insulation.

## Description

### FIELD OF THE INVENTION

The present invention relates to a system and method for inspection of an insulation system of a cable, wherein the cable comprises an electric conductor and an insulation system surrounding the electric conductor.

### BACKGROUND

High-voltage electric power transmission systems have become of increased significance in the energy transition as these systems enable long distance energy connections which could help to deal with the fluctuations of wind power and photovoltaics.

High voltage cables typically comprise a central electrical conductor, mostly aluminum or copper, and successively and coaxially around this electrical conductor, an insulation system surrounding the electric conductor, usually comprising a semiconductive inner layer, an electrically insulating intermediate layer, a semiconducting outer layer. These layers are based on polymer(s), which can be crosslinked or not.

A key factor for high voltage cables concerns the insulation material surrounding the metal conductor in the center of the cable. Considerable research and development efforts have been spent on improving the insulation material. In the course of these efforts, it requires analyzing samples of the insulation material. The aim is to investigate cable health which may vary with the radial, longitudinal and angular location in the cable insulation. For example, electrical measurements on the full cable sample require long segments of cable and are thus costly and may not resolve the spatial variations. The preparation of samples of distinguishing spatial positions within the insulation material of the cable is time consuming and elaborate.

Also, the impurity level in the insulation from external sources is often monitored by a cable checker in a systematic sampling manner. The cable checker detects defects in the insulation layer; e.g. cavities, contaminants, and electrical/water trees. For this analysis, normally the outer layers and the conductor are removed, and the cable sample comprising the insulation and semiconductor layers is inserted into a hot oil bath, where the crystalline part of XLPE insulation melts and the sample becomes transparent. With the aid of a light source the defects could be revealed by visual inspection of an operator. If any defects are found, the sample is sliced into thinner samples and may be further inspected with a high-resolution microscope.

The oil bath method is slow, and thus with the above method, only a short section of the cable can be analyzed at a time, meaning that only short portions of the cable system will be covered. The oil bath further ruins the thermal history of the cable and may cause bubbles to form in the insulation, thereby possibly altering the shape of defects. There may also be a need to perform further dissection of the insulation system after revealing any defects to accurately determine geometrics and/or type of pollutant particles.

There is thus a need for an alternative system and method for inspecting an insulation system of a cable.

The object of the invention is to provide a system and method for inspecting an insulation system of a cable which alleviates at least some of the drawbacks of prior art.

The object of the invention is achieved by means of the features of the patent claims.

In one configuration, a system for inspection of an insulation system of a cable, wherein the cable comprises an electric conductor and an insulation system surrounding the electric conductor, comprises:
- a cable stripping device configured to radially slice the cable insulation system to produce a helically formed strip of insulation, and
- an optical inspection device configured to receive the helically formed strip of insulation and inspect it to detect any anomalies present in the helically formed strip of insulation

A method for inspection of an insulation system of a cable, wherein the cable comprises an electric conductor and an insulation system surrounding the electric conductor, may in one configuration comprise the steps of:
- radially slicing the cable insulation system to produce a helically formed strip of insulation, and
- inspecting the helically formed strip of insulation by means of an optical inspection device to detect any anomalies present in the helically formed strip of insulation.

In this description the term insulation system includes all layers and fillings included in an electric cable arranged successively and coaxially around the central conductor.

By the term radially slice, it is meant a process where a cutting device such as a knife or blade or other suitable device is used to cut through all layers in the insulation system in a radial direction and move the cutting device relative to the cable in a circumferential direction. Radial direction refers to a direction along the radius of the cross section of the cable, ie. in this context, cutting from the outer surface towards the central axis. This slices the insulation to provide a strip of insulation.

When the cutting device is simultaneously moved in the axial direction of the cable, there is thus formed a helically formed strip of insulation.

By anomalies present in the helically formed strip of insulation, it is meant any characteristic of the insulation system that deviates from the intended or "normal" characteristics. This may be thickness variations, insufficient grip/binding between the layers of the insulation system, foreign particles, larger particles or other contaminations in the insulation material, cavities, electrical/water trees etc.

The cable stripping device may be any device suitable for radially slicing the cable insulation system to produce a helically formed strip of insulation and comprises for example a stripping knife or stripping blade. The stripping knife is arranged with its sharp edge mainly perpendicular to the outer surface of the cable and may be arranged to enable adjustment of the angle relative to the cross section of the cable. Adjusting the angle relative to the cross section of the cable causes an adjustment of the thickness of the resulting helically formed strip of insulation. The thickness of the helix is for example controlled to be 50 to 500 microns, or 500 to 4000 microns, a width that will ensure that the insulation is transparent when inspected by use of the optical inspection device.

The optical inspection device comprises for example one or more optical sensors, such as a light sensitive sensor, a camera, etc. The optical inspection device may also comprise a light source, which may be arranged on the opposite side or the same side of the strip of insulation when the helically formed strip of insulation is received by the optical inspection device. The optical inspection device may alternatively or additionally be a manually operated device such as a microscope, magnifying glass etc. for manual visual inspection of the insulation strip, or the operator may merely use his/her eyes. In some configurations, more optical sensors are used to increase data resolution of the resulting inspection data. The cable stripping device and the optical inspection device may be arranged in a fixed position relative to each other.

The system may further comprise a processing device and a data storage, wherein the optical inspection device is in communication with the processing device and the data storage and the processing device is configured to process data from the optical inspection device and store inspection data in the data storage.

The cable may be provided with an alignment mark and the optical inspection device may in that case be configured to detect the alignment mark. The alignment mark is for example a longitudinal notch in the outer semiconductor layer, a color mark, or any suitable mark that can be marked in a known location on the cable and identified by the optical inspection device.

As the position of the alignment mark on the cable is known, the processing device can then be configured to use the detected alignment mark to calculate the length of the helically formed strip of insulation and store length information in the data storage together with inspection data.

The processing device may compare inspection data with reference data and store detected anomalies in the data storage only when the difference between inspection data and reference data exceeds a threshold.

Further the length information and inspection data may be combined to produce a 3D representation of the insulation of the cable. The 3D representation may be stored for later analysis of the cable performance and may aid in understanding the mechanisms of cable failure.

In one configuration, inspecting the helically formed strip of insulation comprises using hyper-spectral analysis and/or 3D electric field analysis In one configuration, inspecting the helically formed strip of insulation comprises 3D electric field analysis of the 3D representation of the insulation of the cable. The above-described system and method provides a more efficient process that prior art technology and have the advantage of being able to check more parts of the cable, performing inspections before and/or after electric testing/impulse testing, enables detection of variations in extruding process by mapping, and can determine if the problems are process problems or incidental. The described process may also be utilized for testing after breakdown.

The invention will now be described in more detail by means of examples and by reference to the accompanying figures.
Figure 1a and 1b illustrate schematically a cable.
Figure 2a and 2b illustrate schematically use of a cable stripping device on a cable.
Figure 3 illustrates one embodiment of the process of slicing cable insulation of a cable.
Figure 4 schematically further illustrates the process of slicing cable insulation of a cable.
Figure 5 illustrates schematically an optical inspection device.
Figure 6 illustrates another embodiment of the process of slicing cable insulation of a cable.

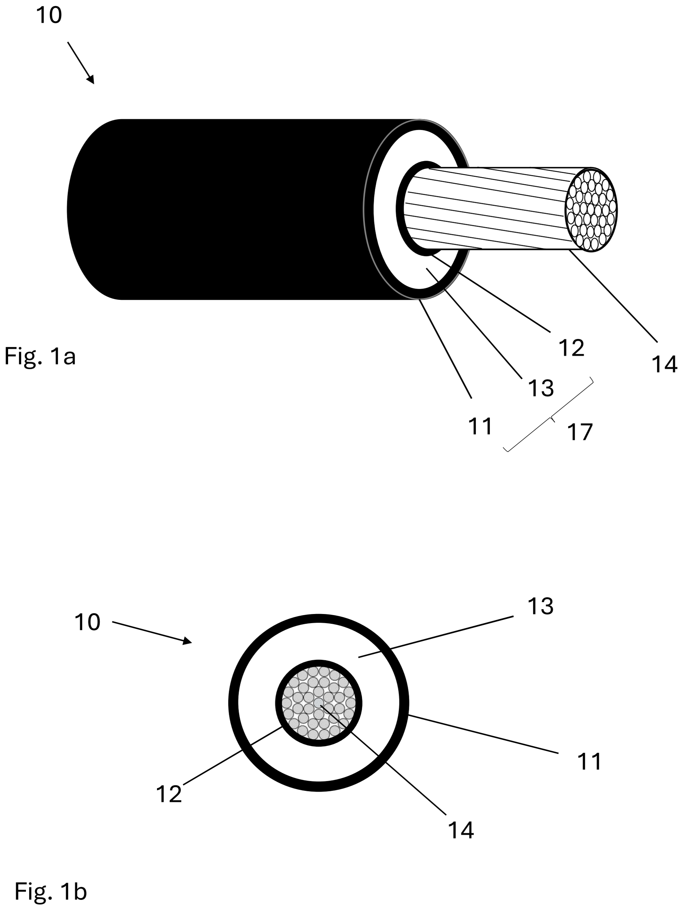

Figure 1a and 1b illustrates a cable 10 comprising an electric conductor 14 and an insulation system 17, here comprising an inner semiconductive layer 12, an electrically insulating intermediate layer 13 and an outer semiconducting layer 11 surrounding the electric conductor 14. In the illustration of figure 1a, a section of the insulation system 17 has been stripped off, thus baring the electric conductor 14.

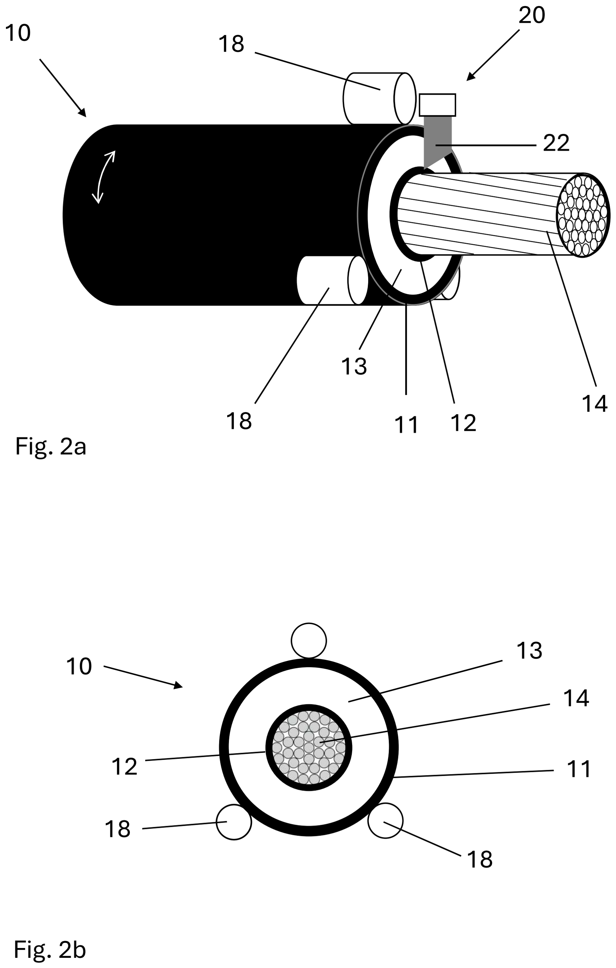

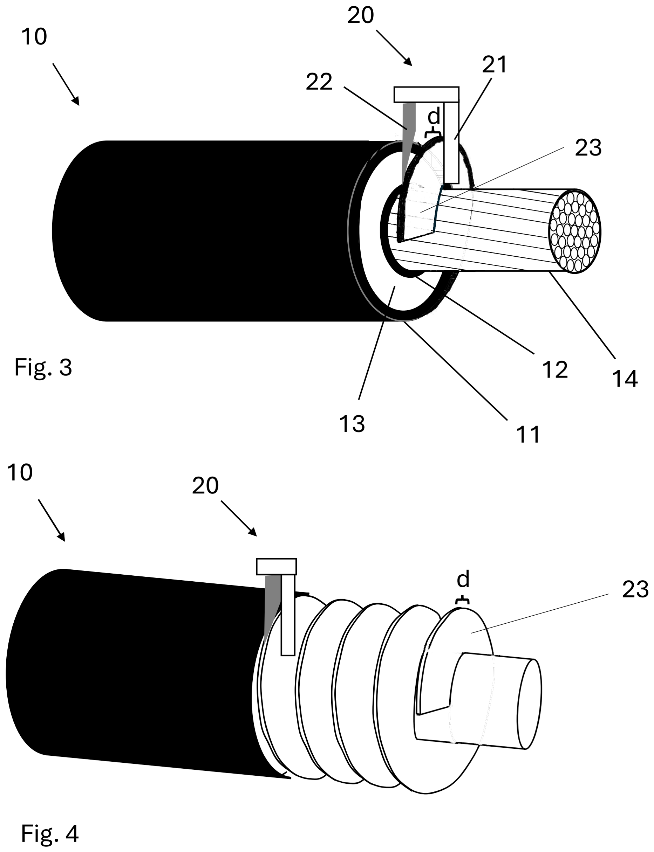

Figure 2a, 2b and 3 illustrate schematically use of a cable stripping device 20 and an optical inspection device 21 on the cable 10.

The cable stripping device 20 comprises a slicing tool such as a stripping knife or blade 22 and is configured to radially slice the cable insulation system 17 to produce a helically formed strip of insulation. The cable stripping device 20 may further comprise one or more rotating devices 18, that may either be arranged to rotate the stripping knife 22 or, as illustrated in the figure, arranged to rotate the cable, while keeping the stripping knife 21 stationary. The rotating devices 18 may in other configurations be separate devices from the cable stripping device.

The cable stripping device is for example a commercial stripping tool such as Hivotec CP series or AMSI stripping tool from Alroc SAS. These tools are commercially used for removing insulation system prior to cable joints and termination installation and will not be described in detail herein.

The stripping knife 22 is positioned with a predetermined angle with respect to the cross-sectional plane of the cable 10, to radially slice the insulation system, ie. cut through all layers 11,12,13 of the insulation system 17 to provide a slice of insulation with a predetermined thickness. The angle of the stripping knife 22 determines the thickness of the slice of insulation. The stripping knife may be arranged adjustably to enable adjustment of the angle to be able to adjust the thickness of the produced slice of insulation. Figure 3 illustrates a situation where the stripping knife 22 has sliced the insulation system 17 to form a strip 23 of insulation with a thickness d. When the cable 10 is rotated further, the stripping knife 22 will continue to slice and thereby provide a helically formed strip 23 of insulation, as illustrated in figure 4.

The angle of the stripping knife 22 and thus the thickness of the strip 23 of insulation may be the same for the entire helically formed strip of insulation, or the thickness d may be varied along the helically formed strip of insulation.

The system further comprises an optical inspection device 21 which is configured to receive the helically formed strip 23 of insulation and inspect it to detect any anomalies present in the helically formed strip 23 of insulation and/or provide other characterizing information of the insulation.

The cable stripping device and the optical inspection device can be arranged in a fixed position relative to each other, for example being arranged as an integrated assembly that can be installed onto the cable of interest at the time of inspection.

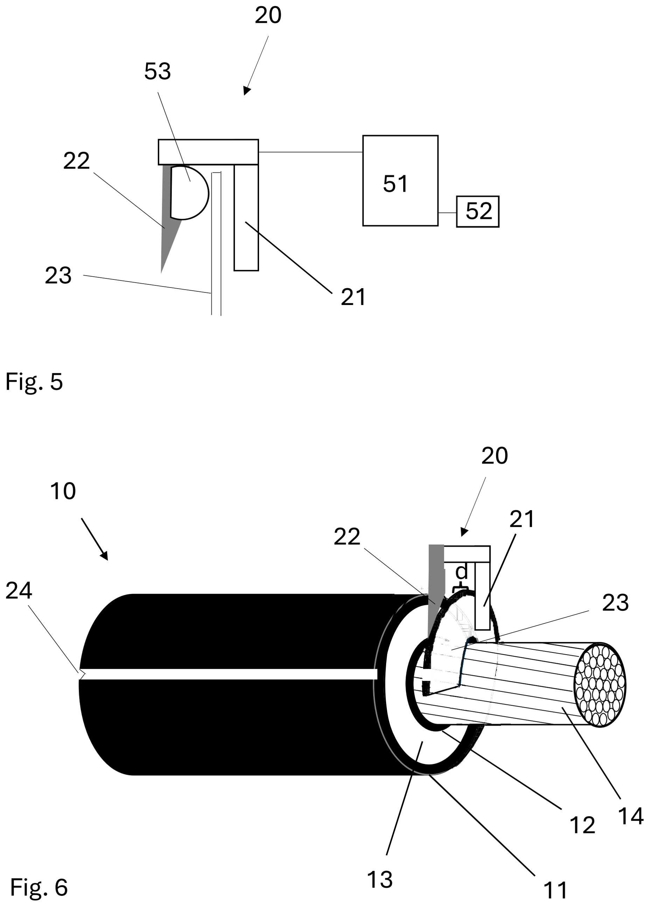

Figure 5 illustrates schematically an optical inspection device 20 integrated with a cable stripping device 22.

The optical inspection device 21 comprises for example one or more optical sensors, such as a light sensitive sensor, a camera, etc. The optical inspection device 21 may also comprise a light source 53, which may be arranged on the opposite side of the strip 23 of insulation, thus operating as a backlight for the optical sensor, in which case the optical sensor receives light transmitted through the strip 23 of insulation. The light source may alternatively be arranged on the same side of the strip 23 as the optical sensor, in which case the optical sensor receives light reflected by the strip 23 of insulation.

The system for inspection of an insulation system of a cable may further comprise a data processing device 51 and possibly data storage 52. The data from the optical inspection device 21 may be stored for later inspection in a data storage, or the optical inspection device may be in communication with the processing device and a data storage, and the processing device can be configured to process data from the optical inspection device and store inspection data in the data storage.

The processing device 51 may be configured to analyze the data from the optical inspection device 21 to determine any anomalies present in the helically formed strip of insulation. This may for example be done by comparing inspection data with reference data and mark deviations between the inspection data and reference data as anomalies or possible anomalies. The system may be configured to store all data or to store detected anomalies in the data storage only when the difference between inspection data and reference data exceeds a threshold.

Figure 6 illustrates an embodiment of the system for inspection of an insulation system of a cable 10 where the cable 10 is provided with an alignment mark 24. In this example the alignment mark is a straight longitudinal notch in the outer semiconductor layer 11. The alignment mark may be provided in the complete length of the cable 10 or may be included in the section of the cable to be inspected, prior to inspection.

The alignment mark will be visible in the helically formed strip 23 of insulation and can be detected by the optical inspection device and the processing device. The processing device can use the alignment mark to calculate the length of the helically formed strip of insulation and store length information in the data storage together with inspection data. The length information can further be combined with inspection data to produce a 3D representation of the insulation of the cable.

### List of reference numbers

- 10: cable
- 11: outer semiconductor layer
- 12: inner semiconductor layer
- 13: insulation
- 14: electrical conductor
- 17: insulation system
- 18: rotating device
- 20: cable stripping device
- 21: optical inspection device
- 22: stripping knife/blade
- 23: insulation slice
- 24: alignment mark
- 51: data processing device
- 52: data storage
- 53: light source

## Claims

1. System for inspection of an insulation system of a cable, wherein the cable comprises an electric conductor and an insulation system surrounding the electric conductor, the system comprising:
- a cable stripping device configured to radially slice the cable insulation system to produce a helically formed strip of insulation, and
- an optical inspection device configured to receive the helically formed strip of insulation and inspect it to detect any anomalies present in the helically formed strip of insulation.

2. The system according to claim 1, further comprising a processing device and a data storage, and wherein the optical inspection device is in communication with the processing device and the data storage, and the processing device is configured to process data from the optical inspection device and store inspection data in the data storage.

3. The system according to one of the previous claims, wherein the cable stripping device and the optical inspection device are arranged in a fixed position relative to each other.

4. The system according to one of the previous claims, wherein the optical inspection device comprises at least one optical sensor.

5. The system according to one of the previous claims, wherein the cable stripping device comprises a slicing tool adjustable arranged to enable adjustment of the thickness of the helically formed strip of insulation.

6. The system according to one of the claims 2-5, where the cable is provided with an alignment mark and the optical inspection device is configured to detect the alignment mark.

7. The system according to claim 6, wherein the processing device is configured to use the alignment mark to calculate the length of the helically formed strip of insulation and store length information in the data storage together with inspection data.

8. Method for inspection of an insulation system of a cable, wherein the cable comprises an electric conductor and an insulation system surrounding the electric conductor, the method comprising the steps of:
- radially slicing the cable insulation system to produce a helically formed strip of insulation, and
- inspecting the helically formed strip of insulation by means of an optical inspection device to detect any anomalies present in the helically formed strip of insulation.

9. The method according to claim 8, further comprising storing inspection data in a data storage.

10. The method according to claim 9, comprising comparing inspection data with reference data and store detected anomalies in the data storage only when the difference between inspection data and reference data exceeds a threshold.

11. The method according to one of the claims 8 to 10, where the cable is provided with an alignment mark and the optical inspection device detects the alignment mark.

12. The method according to claim 11, comprising the step:
calculating the length of the helically formed strip of insulation based on the detected alignment mark and storing length information in the data storage together with inspection data.

13. The method according to claim 12, comprising a step of combining the length information and inspection data to produce a 3D representation of the insulation of the cable.

14. The method according to one of claims 9-13, wherein inspecting the helically formed strip of insulation comprises using hyper-spectral analysis and/or 3D electric field analysis

15. The method according to one of claims 13-14, wherein inspecting the helically formed strip of insulation comprises 3D electric field analysis of the 3D representation of the insulation of the cable.
